Europäisches Patentamt

European Patent Office

Office européen des brevets

(11) Publication number: **0 055 086**
**B1**

(12) **EUROPEAN PATENT SPECIFICATION**

(45) Date of publication of patent specification: **06.04.88**

(51) Int. Cl.⁴: **C 08 L 27/06**

(21) Application number: **81305930.0**

(22) Date of filing: **17.12.81**

(54) Polyvinyl chloride resin blends.

(30) Priority: **18.12.80 US 217732**

(43) Date of publication of application:
**30.06.82 Bulletin 82/26**

(45) Publication of the grant of the patent:
**06.04.88 Bulletin 88/14**

(84) Designated Contracting States:
**BE DE FR GB NL**

(56) References cited:
**FR-A-2 032 731**
**US-A-3 626 033**

**Styrene Polymers: "Technology and
Environmental Aspects"; Applied Science
Publishers Ltd, London (GB); p. 60
Encyclopedia of Polymer Science and
Technology, vol. 7, p. 581**

**The file contains technical information
submitted after the application was filed and
not included in this specification**

(73) Proprietor: **ATLANTIC RICHFIELD COMPANY
Arco Plaza 515 S. Flower Street
Los Angeles California 90071 (US)**

(72) Inventor: **Doak, Kenneth, Worley
3469 Burnett Drive
Murrysville, PA 15668 (US)**

(74) Representative: **Cropp, John Anthony David
et al
MATHYS & SQUIRE 10 Fleet Street
London, EC4Y 1AY (GB)**

Courier Press, Leamington Spa, England.

# Description

## Background of the Invention

The present invention relates to blends of polyvinyl chloride resins with copolymers of vinyl aromatic compounds such as styrene, vinyltoluene, or chlorostyrene.

The blending of polyvinyl chloride resins with other polymeric materials has heretofore been suggested for the purpose of altering the properties of a polyvinyl chloride resin to suit particular applications. Such blends are described, for example, in U.S. 3,626,033 which teaches the formation of blends of polyvinyl chloride, a polydiene rubber nitrile graft copolymer, and a styrene-maleic anhydride copolymer containing 15—30 weight percent of maleic anhydride; and U.S. 3,882,192 which teaches the formation of blends containing a polycarbonate, a vinyl chloride polymer, and an ABS graft polymer, styrene/maleic anhydride copolymer or ethylene/vinyl acetate copolymer.

According to the present invention there is provided a polyvinyl chloride resin blend comprising (a) a polyvinyl chloride resin and (b) a rubber modified copolymer of a vinyl aromatic monomer, such as styrene, and having a heat distortion temperature above that of the polyvinyl chloride resin, characterised in that component (a) is selected from homopolymers of vinyl chloride and copolymers thereof containing up to 20% comonomer, by weight; component (b) is selected from copolymers of vinyl aromatic monomers, such as styrene, and from 14 to 27% by weight of maleic anhydride and copolymers of vinyl aromatic monomers, such as styrene, and from 10 to 18% by weight of an imide derivative of maleic anhydride, said copolymers being modified with at least one rubber selected from the group consisting of block copolymer rubbers of styrene and 55—90% butadiene, and epichlorohydrin rubbers; said component (b) is obtained by polymerising the monomers to form said copolymer in the presence of said rubber; and the polyvinyl chloride resin and the copolymer are present in amounts of from 60 to 80% and 20 to 40% by weight, respectively, of the combined amount of polyvinyl chloride resin and copolymer present in the blend and the rubber is present in an amount of from 5 to 30% by weight of the total amount of rubber-modified copolymer in the blend.

The rubber-modified copolymers employed in the present invention can be intimately dispersed in vinyl chloride polymers and copolymers to form homogeneous blends which exhibit heat distortion temperatures 8.3 to 19.4°C (15—35°F) higher than those of the vinyl chloride polymers. This enables the use of polyvinyl chloride resins in products for which these resins were heretofore unsuitable. These blends are particularly suitable for products requiring a heat distortion temperature of at least 88°C (190°F).

The blends of the present invention contain a polyvinyl chloride resin as the major portion thereof, i.e. from 60 to 80% by weight of the combined weight of polyvinyl chloride resin and copolymer. The polyvinyl chloride resins are commercially available and may be formed by the usual methods of emulsion, suspension, bulk or mass polymerisations. The vinyl chloride resin may comprise a homopolymer of vinyl chloride or a copolymer of vinyl chloride and up to about 20 percent (usually no more than 10 percent) by weight of a copolymerisable olefinically unsaturated comonomer such as vinylidene chloride, vinyl acetate, acrylic acid, methacrylic acid, methyl methacrylate, ethylene or propylene.

The polyvinyl chloride resin is intimately mixed with a rubber-modified copolymer of a vinyl aromatic monomer and maleic anhydride or its imide derivative, the copolymer being employed in an amount of from 20 to 40% by weight of the combined weights of polyvinyl chloride resin and copolymer.

The vinyl aromatic monomer which forms a part of the copolymer is preferably styrene, chlorostyrene, or vinyltoluene containing predominantly p-methylstyrene, but may also include other nuclear substituted methylstyrenes, alpha-methylstyrene, tert-butylstyrene, dichlorostyrene, and the like. When alpha-methylstyrene, tert-butylstyrene, or dichlorostyrene are used, it is frequently advantageous to replace only a part of the styrene.

In the embodiment wherein the copolymer is a copolymer of a vinyl aromatic monomer and a maleic anhydride, such as a styrene-maleic anhydride copolymer, the maleic anhydride units are distributed somewhat at random along the copolymer chain. The weight percent of maleic anhydride present in the copolymer is from 14 to 27% by weight of the vinyl aromatic-maleic anhydride copolymer composition. Such styrene-maleic anhydride copolymers are known compositions, generally prepared by reacting maleic anhydride and styrene at elevated temperatures in the presence of peroxide catalysts. Such copolymers are, for example, described in U.S. 2,769,804, U.S. 2,866,771, U.S. 2,971,939, U.S. 3,336,267 and U.S. 3,919,354. The copolymer preferably will have a weight-average molecular weight of at least 140,000 and more preferably at least 200,000. Melt flow (Condition L, grams/10 minutes) is typically between about 0.20 and 10, and is somewhat dependent on the copolymer type as well as the rubber type. Preferably the styrene or vinyltoluene copolymer will contain about 18 to 25% by weight of maleic anhydride.

In the embodiment, however, wherein the copolymer is a copolymer of a vinyl aromatic monomer and an imide derivative of maleic anhydride, such as a styrene-maleimide copolymer, the weight percent of the maleimide present in the copolymer is from 10 to 18% by weight of the vinyl aromatic-maleimide copolymer composition. Such styrene-maleimide copolymers are known compositions formed, for example, by reacting aqueous ammonia with a styrene-maleic anhydride copolymer under autogenous pressure at 125 to 200°C, as described in U.S. 3,998,907 to DiGiulio. Preferably, the styrene copolymer will contain about 12 to 18% by weight of maleimide.

The blending of 20 to 40 weight percent of anhydride or imide copolymers into PVC usually causes some reduction in toughness. In the present invention, therefore, certain rubber-modified copolymers are employed which have higher impact strength than the unmodified copolymers. The rubber is selected from block copolymer rubbers of styrene and 55—90% butadiene and epichlorohydrin rubbers and the rubber-modified copolymer contains 5 to 30% by weight of rubber. The rubber-modified copolymer is prepared by copolymerising the monomers forming the copolymer in the presence of the rubber; for example, by copolymerising styrene and maleic anhydride in the presence of part or all of one or more rubbers selected from epichlorohydrin rubbers (Hydrin elastomers of B.F. Goodrich Co.), and block copolymers of styrene and 55 to 90% of butadiene. The block copolymers could include the following, but are not necessarily limited to (a) linear diblock (or 'tapered' diblock) copolymers containing 10 to 45% styrene such as the commercial rubbers Stereon 720 and 840; (b) radial rubbers such as Solprene 406, 411, and 414; (c) triblock copolymers such as Kraton 1101; (d) hydrogenated styrene-butadiene block copolymers such as Kraton G; and (e) star-shaped copolymers containing up to 20 styrenebutadiene diblock branches, sometimes mixed with polybutadiene branches (U.S. Patent 4,010,226). For applications where good light resistance is needed it is desirable to use a hydrogenated styrene-butadiene block copolymer or epichlorohydrin rubber.

The polyvinyl chloride resin and rubber-modified styrene-maleic anhydride or styrene-maleimide copolymer may be blended, in the prescribed amounts, by mechanically working the two components at a temperature high enough such that the mass is plasticised, for example by milling on a roll or an internal mixer such as a Banbury mixer. In order to obtain a homogeneous blend the mixing equipment must provide high shear. Generally it is preferable to plasticise the polyvinyl chloride resin first and then add the rubber-modified copolymer to the highly viscous molten resin, preferably in more than one increment. Unsatisfactory mixing is sometimes obtained if solid polyvinyl chloride resin, especially a minor amount, is added to the molten copolymer, which normally has a lower melt viscosity. In some cases good mixing can be obtained in a high shear extruder which has one or more side feed ports for introducing the rubber-modified copolymer to the molten polyvinyl chloride.

The following illustrates the types and amounts of the components to be used in order to obtain blends which will exhibit heat distortion temperatures in the range of about 85 to 90°C (185 to 194°F).

For the purposes of the illustration, the polyvinyl chloride resin employed is an extrusion grade homopolymer containing stabilisers and about 3% of a plasticiser, and exhibits a heat distortion temperature of about 72°C (162°F) (ASTM Method D648).

If the copolymer is a styrene-maleic anhydride copolymer containing about 20 weight percent of maleic anhydride, mixing it in amounts of about 25 to 35 weight percent with about 75 to 65 weight percent of the polyvinyl chloride resin will vary the heat distortion temperature from about 85°C (185°F) to about 90°C (194°F). In order to obtain about the same temperature range using a copolymer containing about 25 weight percent of maleic anhydride, about 78—69 weight percent of the polyvinyl chloride resin may be mixed with 22 to 31 weight percent of the copolymer.

In the embodiment wherein an imide derivative of maleic anhydride is used, about the same range of heat distortion temperatures will be obtained by blending about 75 to 65 weight percent of the polyvinyl chloride resin with about 25 to 35 weight percent of the styrene-maleimide copolymer containing about 12% maleimide, or by blending about 78 to 69 weight percent of the polyvinyl chloride resin with about 22 to 31 weight percent of the copolymer containing about 15 weight percent maleimide.

If about 70 weight percent of the polyvinyl chloride resin is blended with about 30 weight percent of a copolymer containing about 80 weight percent of vinyltoluene and about 20 weight percent of maleic anhydride, the blend will exhibit a heat distortion temperature of about 88°C (190°F).

The rubber-modified copolymers have slightly lower softening temperatures than the unmodified copolymers, e.g. about 2.8 to 8.3°C (5 to 15°F) or more, depending on the amount of rubber present. Therefore, more of the rubber-modified copolymer must be used in the blend to obtain the same heat distortion temperature as with the unmodified copolymer. It is sometimes advantageous to use a rubber-modified copolymer of vinyltoluene and maleic anhydride or chlorostyrene and maleic anhydride.

If about 60% of the polyvinyl chloride resin is blended with about 40 weight percent of a rubber-modified styrene-maleic anhydride copolymer containing about 20 weight percent of maleic anhydride and the copolymer contains about 25 weight percent of block copolymer rubber based on the total weight, the blend will exhibit a heat distortion temperature of about 88°C (190°F).

The above represent results obtainable with one type of polyvinyl chloride resin, a homopolymer containing some plasticiser.

However, there are various types of polyvinyl chloride resins which normally exhibit somewhat different heat distortion temperatures, so that the heat distortion temperatures of a blend containing a certain amount of a rubber-modified copolymer will be somewhat dependent on the heat distortion temperature of the polyvinyl chloride resin used. However, the increase in heat distortion temperature caused by the addition of a particular type of rubber-modified copolymer will be dependent primarily on the amount added, and will generally be in the range of 8.3 to 19.4°C (15—35°F). Blends containing no plasticiser will generally exhibit a slightly higher heat distortion temperature than corresponding blends containing plasticiser. Copolymers of polyvinyl chloride containing a small amount of vinyl acetate or propylene typically exhibit a slightly lower heat distortion temperature than an unplasticised homopolymer.

### Claims

1. A polyvinyl chloride resin blend comprising (a) a polyvinyl chloride resin and (b) a rubber-modified copolymer of a vinyl aromatic monomer, and having a heat distortion temperature above that of the polyvinyl chloride resin, characterised in that

component (a) is selected from homopolymers of vinyl chloride and copolymers thereof containing up to 20% comonomer, by weight;

the copolymer of component (b) is selected from copolymers of vinyl aromatic monomers and from 14 to 27% by weight of maleic anhydride and copolymers of vinyl aromatic monomers and from 10 to 18% by weight of an imide derivative of maleic anhydride;

the rubber of component (b) is at least one rubber selected from the group consisting of block copolymer rubbers of styrene and 55—90% butadiene, and epichlorohydrin rubbers;

said component (b) is obtained by polymerising the monomers to form said copolymer in the presence of said rubber; and

said polyvinyl chloride resin and said copolymer are present in amounts of from 60 to 80% and 20 to 40% by weight, respectively, of the combined amount of polyvinyl chloride resin and copolymer present in the blend and the rubber is present in an amount of from 5 to 30% by weight of the total amount of rubber-modified copolymer in the blend.

2. A polyvinyl chloride resin blend as claimed in claim 1 characterised in that said vinyl aromatic monomer is selected from styrene, vinyltoluene and chlorostyrene.

3. A polyvinyl chloride resin blend as claimed in claim 2 characterised in that the copolymer of (b) is selected from styrene-maleic anhydride copolymers and vinyltoluene-maleic anhydride copolymers.

4. A polyvinyl chloride resin blend as claimed in claim 2 or claim 3 characterised in that the copolymer of (b) contains from 18 to 25% by weight of maleic anhydride.

5. A polyvinyl chloride resin blend as claimed in claim 3 or claim 4 characterised in that it has a heat distortion temperature of at least 88°C (190°F).

6. A polyvinyl chloride resin blend as claimed in claim 2 characterised in that the copolymer of (b) is selected from styrenemaleimide copolymers and vinyltoluene-maleimide copolymers.

7. A polyvinyl chloride resin blend as claimed in claim 6 characterised in that the copolymer of (b) contains from 12 to 18% by weight of maleimide.

8. A polyvinyl chloride resin blend as claimed in any one of claims 1 to 7 characterised in that the copolymer of (b) is selected from copolymers of styrene with from 18 to 25% by weight of maleic anhydride and copolymers of styrene with from 12 to 18% by weight of an imide derivative of maleic anhydride.

### Patentansprüche

1. Polyvinylchlorid-blend, umfassend (a) ein Polyvinylchloridharz und (b) ein Kautschuk-modifiziertes Copolymeres eines vinylaromatischen Monomeren, mit einer Temperaturformstabilität oberhalb der des Polyvinylchloridharzes, dadurch gekennzeichnet, daß Komponente (a) ausgewählt ist aus Homopolymeren von Vinylchlorid und Copolymeren davon, die bis zu 20 Gew.-% Comonomer enthalten;

das Copolymere der Komponente (b) ausgewählt ist aus Copolymeren von vinylaromatischen Monomeren und 14 bis 27 Gew.-% Maleinsäureanhydrid und Copolymeren von vinylaromatischen Monomeren und 10 bis 18 Gew.-% eines Imidderivates von Maleinsäureanhydrid;

der Kautschuk der Komponente (b) mindestens ein Kautschuk ist, ausgewählt aus der Gruppe, bestehend aus blockcopolymeren Kautschuken von Styrol und 55 bis 90% Butadien, und Epichlorhydrinkautschuken; die Komponente (b) erhalten wird durch Polymerisieren der Monomeren unter Bildung des Copolymeren in Gegenwart des Kautschuks; und

das Polyvinylchloridharz und das Copolymere in Mengen von 60 bis 80 Gew.-%, bzw. von 20 bis 40 Gew.-%, bezogen auf die in der Polymerblend vorhandene Gesamtmenge an Polyvinylchloridharz und Copolymer, und der Kautschuk in einer Menge von 5 bis 30 Gew.-%, bezogen auf die Gesamtmenge an kautschukmodifiziertem Copolymer in der Polymerblend, vorhanden ist.

2. Polyvinylchlorid-blend nach Anspruch 1, dadurch gekennzeichnet, daß das vinylaromatische Monomere ausgewählt ist aus Styrol, Vinyltoluol und Chlorstyrol.

3. Polyvinylchlorid-blend nach Anspruch 2, dadurch gekennzeichnet, daß das Copolymer von (b) ausgewählt ist aus Styrol-Maleinsäureanhydrid-Copolymeren und Vinyltoluol-Maleinsäureanhydrid-Copolymeren.

4. Polyvinylchlorid-blend nach Anspruch 2 oder 3, dadurch gekennzeichnet, daß das Copolymer von (b) 18 bis 25 Gew.-% Maleinsäureanhydrid enthält.

5. Polyvinylchlorid-blend nach Anspruch 3 oder 4, dadurch gekennzeichnet, daß sie eine Temperaturformstabilität von mindestens 88°C (190°F) besitzt.

6. Polyvinylchlorid-blend nach Anspruch 2, dadurch gekennzeichnet, daß das Copolymer von (b) ausgewählt ist aus Styrol-Maleinimid-Copolymeren und Vinyltoluol-Maleinimid-Copolymeren.

7. Polyvinylchlorid-blend nach Anspruch 6, dadurch gekennzeichnet, daß das Copolymer von (b) 12 bis 18 Gew.-% Maleinimid enthält.

8. Polyvinylchlorid-blend nach einem der Ansprüche 1 bis 7, dadurch gekennzeichnet, daß das Copolymer bon (b) ausgewählt ist aus Copolymeren von Styrol mit 18 bis 25 Gew.-% Maleinsäureanhydrid und Copolymeren von Styrol mit 12 bis 18 Gew.-% eines Imidderivates von Maleinsäureanhydrid.

**Revendications**

1. Mélange de résine de chlorure de polyvinyle comprenant (a) une résine de chlorure de polyvinyle et (b) un copolymère modifié par un caoutchouc d'un monomère aromatique vinylique et ayant une température de déformation à chaud supérieure à celle de la résine de chlorure de polyvinyle, caractérisé en ce que:

le component (a) est choisi parmi des homopolymères du chlourure de vinyle et ses copolymères contenant jusqu'à 20% de comonomère en poids;

le copolymère du composant (b) est choisi parmi des copolymères de monomères aromatiques vinyliques et de 14 à 27% en poids d'anhydride maléique, et des copolymères de monomères aromatiques vinyliques et de 10 à 18% en poids d'un dérivé imide d'anhydride maléique;

le caoutchouc du composant (b) est au moins un caoutchouc choisi dans le groupe comprenant des caoutchoucs de copolymères à blocs du styrène et de 55 à 90% de butadiène et des caoutchoucs d'épichlorohydrane;

ce composant (b) est obtenu par polymérisation des monomères pour former le copolymère en présence du caoutchouc; et,

cette résine de chlorure de polyvinyle et ce copolymère sont présents en des quantités de 60 à 80% et de 20 à 40% en poids, respectivement, de la quantité combinée de résine de chlorure de polyvinyle et de copolymère présents dans le mélange et le caoutchouc est présent en une quantité de 5 à 30% en poids de la quantité totale de copolymère modifié par un caoutchouc dans le mélange.

2. Mélange de résine de chlorure de polyvinyle suivant la revendication 1, caractérisé en ce que ce monomère aromatique vinylique est choisi parmi le styrène, le vinyltoluène et le chlorostyrène.

3. Mélange de résine de chlorure de polyvinyle suivant la revendication 2, caractérisé en ce que le copolymère de (b) est choisi parmi des copolymères de styrèneanhydride maléique et des copolymères de vinyltoluèneanhydride maléique.

4. Mélange de résine de chlorure de polyvinyle, suivant la revendication 2 ou la revendication 3, caractérisé en ce que le copolymère de (b) contient de 18 à 25% en poids d'anhydride maléique.

5. Mélange de résine de chlorure de polyvinyle suivant la revendication 3 ou la revendication 4, caractérisé en ce qu'il a une température de déformation à chaud d'au moins 88°C (190°F).

6. Mélange de résine de chlorure de polyvinyle suivant la revendication 2, caractérisé en ce que le copolymère de (b) est choisi parmi des copolymères de styrènemaléimide et des copolymères de vinyltoluène-maléimide.

7. Mélange de résine de chlorure de polyvinyle suivant la revendication 6, caractérisé en ce que le copolymère de (b) contient de 12 à 18% en poids de maléimide.

8. Mélange de résine de chlorure de polyvinyle suivant l'une quelconque des revendications 1 à 7, caractérisé en ce que le copolymère de (b) est choisi parmi des copolymères de styrène avec 18 à 25% en poids d'anhydride maléique et des copolymères de styrène avec 12 à 18% en poids d'un dérivé imide d'anhydride maléique.